# EUROPEAN PATENT SPECIFICATION

(11) **EP 1 582 082 B1**
(45) Date of publication and mention of the grant of the patent: **26.01.2011**
(21) Application number: 03782497.6
(22) Date of filing: 30.12.2003
(51) Int. Cl.: H04W 48/20

(54) **SELECTION OF ACCESS POINT IN A WIRELESS COMMUNICATION SYSTEM**
AUSWAHL DES ZUGANGSPUNKTS IN EINEM DRAHTLOSEN KOMMUNIKATIONSSYSTEM
SELECTION DE POINT D'ACCES DANS UN SYSTEME DE COMMUNICATION SANS FIL

(30) Priority: 09.01.2003 US 338874; 11.04.2003 US 411350
(43) Date of publication of application: 05.10.2005
(73) Proprietor: Nokia Corporation, 02150 Espoo (FI)
(72) Inventor: SINIVAARA, Hasse, FIN-02760 Espoo (FI); VÄISÄNEN, Ari, FIN-36110 Ruutana (FI)
(74) Representative: Virkkala, Antero Jukka
(86) International application number: PCT/FI2003/000990
(87) International publication number: WO 2004/064439

(56) References cited:
- EP-A2- 1 349 412
- US-A- 5 987 062
- US-A1- 2001 024 953
- US-A1- 2003 134 642
- BALACHANDRAN, A ET AL.: 'Hot-spot congestion relief in public-area wireless networks' FOURTH IEEE WORKSHOP ON MOBILE COMPUTING SYSTEMS AND APPLICATIONS June 2002, pages 70 - 80, XP010592546 & DATABASE INSPEC [Online] Database accession no. 7387975

## Description

### Field of the Invention

The invention relates generally to the selection of an access point in a wireless communication system providing data services to user-operated terminals. The selection mechanism of the invention can be utilized by a mobile terminal both when joining the network and later, when roaming in the network. The mechanism of the invention therefore also supports mobility in a wireless communication system.

### Background of the Invention

The current development towards truly mobile computing and networking has brought on the evolvement of various access technologies that also provide the users with access to the Internet when they are outside their own home network. At present, wireless Internet access is typically based on either wireless LAN (WLAN) technology or mobile networks, or both.

Wireless LAN systems are typically extensions of a wired network, providing mobile users with wireless access to the wired network. In wireless LAN technology, two basic network topologies are available for network configuration: an ad-hoc network and an infrastructure network. An ad-hoc network is formed by two or more independent mobile terminals without the services of a base station, i.e. in an ad-hoc network the terminals communicate on a peer-to-peer basis. An ad-hoc network is normally formed for temporary purposes. The infrastructure network, in turn, comprises one or more wireless base stations, called access points, which form part of the wired infrastructure. In this type of network, all traffic goes through the access points, regardless of whether the traffic is between two terminals or a terminal and the wired network, i.e. the mobile terminals do not communicate on a peer-to-peer basis. The mobile terminals are provided with wireless LAN cards, whereby they can access the wired network, such as the Internet, through said access points, which are mainly located in various hot spots, such as airports, convention centers, railway stations, or shopping malls.

In order to be able to deliver messages, a mobile terminal must first join the network. In this process, which is commonly termed association, the mobile station associates with one of the access points in its neighborhood. At any given instant, a particular access point, i.e. the one with which the terminal is associated, acts as the serving access point for the mobile terminal.

In the following, typical current implementations of the association procedure are discussed briefly. In the simplest embodiment, the terminal selects the first access point it detects. When the terminal is turned on, it starts to scan the channels available in the geographical area in question and selects the first access point it receives. In a more sophisticated approach, the selection is based on the information obtained from the transmissions of a plurality of access points. The terminal utilizes either active or passive scanning in order to detect the access points in the region. In active scanning, the terminal sends a message called a Probe on each channel. When an access point receives a Probe message, it returns a Probe Response to the terminal. In passive scanning, the terminal finds the network simply by listening for the beacon messages, which are periodically broadcast by each access point. Utilizing the above-described active or passive scanning, the terminal scans the channels and examines the information transmitted in the beacon frames or in the Probe Response frames, which contain information about the properties of the access point, such as parameters indicating the security functions of the access point. The terminal determines and stores a parameter termed a RSSI (Received Signal Strength Indicator) which indicates the received signal level on the link to the access point. Having finished the scanning process, the terminal selects the access point with the maximum RSSI, provided that the access point fulfills other requirements set by the terminal. In other words, the terminal assumes that as long as the characteristics of the access point are suitable for the terminal, the access point with the best RSSI provides the best quality of service.

Another important attribute of the WLAN networks is the overlapping of the coverage areas, i.e. cells, of the neighboring access points, since the overlap enables seamless roaming between the cells. When a mobile user with a terminal moves beyond the coverage area of the currently serving access point, the terminal must associate itself with a new access point. This process of transferring an established association from one access point to another is commonly termed re-association.

However, the assumption that the access point with the maximum RSSI provides the best quality of service may lead to a situation where an overwhelming majority of the mobile terminals is associated with a few access points, while some of the access points are substantially idle.

Therefore, load sharing mechanisms have been developed, which result in a more uniform load distribution between the access points, i.e. in a more even distribution of the terminals between all access points. Load sharing mechanisms are based on load information sent by the access points in the beacon or Probe Response frames, the load information indicating the current load of the access point. The load information typically indicates the number of terminals currently associated with the access point. The load information is useful, especially in areas where the cells overlap or in congested areas requiring a multi-cell structure, i.e. where several access points cover essentially the same area.

The above-mentioned use of load information is disclosed in U.S. Patent 6,469,991, for example. This document discloses a wireless communication system in which the beacon message that is broadcast from an access point includes information about the capabilities of the access point, and possibly also load metric information, which generally contains the number of mobile terminals associated with the access point. Based on the information in the beacon message, the wireless terminal chooses the access point with which it wants to associate.

It is further known to transmit various connection attributes from the access points, the selection of the access point being based on the said attributes. International patent application WO01/63842 discloses a method in which the connection is kept in the same network as long as possible. The terminal receives the said attributes from several networks and selects two access points: a first access point, which has the best connection attributes in the network that is the network of the currently serving access point and a second access point, which has the best connection attributes in another network than the network of the currently serving access point. The terminal compares one or more connection attributes of the first and second access points and then re-associates with the second access point if the difference between the connection attributes of the two access points fulfills predetermined criteria. In this way, the connection can be kept in the serving network as long as possible.

However, this method is for roaming use only, as it requires that the terminal already has a serving access point before the method can be initiated.

Generally, a major drawback relating to the above-described known methods for joining the network and re-associating with an access point is that the decision on the correct access point can only be made on the basis of the fixed capabilities and the current load of the access points available for the mobile terminal. Therefore, a number of factors possibly affecting the quality of service within the area of the cell cannot be taken into account when selecting the access point. One such factor is the interference caused by external sources. Possible interference sources in a WLAN environment are Bluetooth devices, for example, which operate on the same frequency band (2.4 GHz) as many WLAN systems, and also other WLAN systems operating independently in the neighborhood. The interference level may also rise if the internal channel separation in the WLAN system is smaller than the optimum 25 MHz.

Furthermore, since the present WLAN networks rely on absolute values of the attributes, such as the load of the access point or the signal level of the serving link, short-term deviations from the overall level of service in the cell may cause undesirable association or re-association decisions. For example, a short-term silent period on a channel or a short-term drop in the load level of the access point may cause such decisions.

The objective of the present invention is to alleviate or eliminate the above-mentioned drawbacks.

### Summary of the Invention

The objective of the invention is to devise a new mechanism for selection of an access point in a wireless communication system, allowing the mobile terminal to take into account the prevailing conditions within the entire cell more effectively than before.

In the present invention, a group of mobile terminals in a cell utilize predetermined attributes which give an indication of the quality of service (QoS) currently experienced by the terminal, by collecting a set of such attributes and sending the set to the serving access point. The serving access point processes the attribute sets received from the mobile terminals and compiles a cell report on the basis of the sets. The cell report indicates the current overall quality of service in the cell. For this reason, the cell report is also called a service report in this context.

The service report is then transmitted so that each mobile terminal in the neighborhood, which is about to select an access point, may receive it. As the neighboring access points send their service reports, these terminals typically receive service reports from several access points. Each of these terminals examines the service report of at least one access point and, based on the examination, selects the access point to which a wireless link is to be established. The examination of the report(s) prevents the terminal from making an incorrect decision.

Thus one aspect of the invention is the provision of a method for selecting an access point in a wireless communication system comprising mobile terminals and access points, each access point being capable of serving the mobile terminals within a service area of the access point, the method comprising the steps of:
- sending at least one set of attributes from a first group of mobile terminals to the access point currently serving said group of mobile terminals, each of said mobile terminals sending a set that contains at least one attribute indicating the quality of a wireless link between the serving access point and the mobile terminal;
- based on the sets, forming a service report describing current service conditions in the service area of the access point;
- transmitting the service report to a second group of mobile terminals;
- in a mobile terminal belonging to said second group, examining at least one service report received; and
- in response to the examining step, selecting the access point to which a wireless link is to be established from said mobile terminal.

In one embodiment of the invention, the attributes that form the set are existing attributes retrieved from the management information base within the MAC layer of the mobile terminal.

In a further aspect the invention provides a wireless communication system comprising mobile terminals and access points, each access point being capable of serving the mobile terminals within a service area of the access point, the system comprising:
- reception means for receiving at least one set of attributes from a first group of mobile terminals, at least one of the attributes to indicate the quality of a wireless link between a particular mobile station and the access point serving said mobile station;
- processing means for forming, based on the sets, a service report describing current service conditions in the service area of the access point;
- transmission means for transmitting the service report to a second group of mobile terminals; and
- in each of the mobile terminals in said second group, (a) examination means for examining a service report received and (b) selection means, responsive to the examination means, for selecting the access point with which a wireless link is to be established.

In another aspect the invention provides an access point for a wireless communication system, the access point comprising:
- interface means for connecting the access point to a distribution system;
- a transceiver for communicating wirelessly with mobile terminals located within a service area of the access point, said transceiver being adapted to receive sets of attributes from the mobile terminals, at least one of the attributes to indicate the quality of a wireless link between the serving access point and the respective mobile terminal;
- processing means for forming, based on the sets, a service report describing current service conditions in the service area of the access point;
wherein the transceiver is further adapted to transmit the service report to at least one mobile terminal.

In a still further aspect the invention provides a mobile terminal for a wireless communication system, the mobile terminal comprising:
- a transceiver for communicating with an access point of the wireless communication system via a wireless link;
- memory means for storing attributes relating to said link;
- collection means for collecting service reports from available access points, each service report describing current service conditions within a service area of a particular access point;
- examination means for examining the service report received by the mobile terminal;
- selection means, responsive to the examination means, for selecting the access point; and
- access means for establishing a wireless link with the access point selected.

The selection of the access point may be made when joining the network, as the other terminals already joined to the network have provided the access point with the attribute sets. The selection may be also be made in connection with roaming, whereby the terminal may itself have transmitted sets to the serving access point. However, a terminal making a re-association decision may be another terminal than those providing the access point with the attribute sets. In one embodiment of the invention, the reporting terminals are laptop computers, which have a higher battery capacity than smaller terminals, such as intelligent phones.

The mechanism of the invention adds intelligence to the selection process. Therefore, the terminals are capable of avoiding cells where one or more factors, such as an external interference source, degrades the quality of service.

Furthermore, short-term deviations from a more stable long-term situation of the cell can no longer cause erroneous association or re-association decisions as easily as before.

In one embodiment of the invention, the access point divides the reporting terminals into different categories with respect to a predetermined attribute, and forms a service report that describes current service conditions within the cell regarding each of the categories. The mobile terminal defines its category with respect to each service report it receives and examines a particular report with regard to the category defined for that report. In this way, only the information that is the most appropriate can be taken as the basis for the selection of the access point.

Other features and advantages of the invention will become apparent through reference to the following detailed description and accompanying drawings.

### Brief Description of the Drawings

In the following, the invention and its preferred embodiments are described more closely with reference to the examples shown in FIG. **1** to **6** in the appended drawings, wherein:

FIG. **1** illustrates a typical communication system according to the invention,

FIG. **2a** illustrates the MAC entity utilized in the present invention,

FIG. **2b** is a flow chart illustrating the operation of a reporting mobile terminal in one embodiment of the invention,

FIG. **2c** is a flow chart illustrating the operation of a reporting mobile terminal in another embodiment of the invention,

FIG. **3** illustrates the message exchange between the mobile terminals and the access points in the communication system of the invention,

FIG. **4a** is a flow chart illustrating the selection of the access point when a mobile terminal joins the network,

FIGS. **4b** and **4c** illustrate an embodiment of the invention, in which the reporting terminals are divided into different categories based on their RSSI values,

FIG. **4d** illustrates an embodiment of the invention, in which the scanning rate of a mobile terminal is controlled based on the category of the terminal,

FIG. **4e** is a flow diagram illustrating one embodiment of the control of the scanning rate,

FIG. **5** is a block diagram illustrating the terminal elements in view of the invention, and

FIG. **6** is a block diagram illustrating the elements of an access point.

### Detailed Description of the Invention

As mentioned above, the system of the invention is preferably based on the IEEE 802.11 standard for wireless local area networking. Furthermore, the wireless network according to the invention operates in the infrastructure mode, i.e. it comprises base stations which forward service requests from the mobile terminals to the fixed network and transfer the services provided by the fixed network to the mobile terminals. The base stations are commonly termed access points.

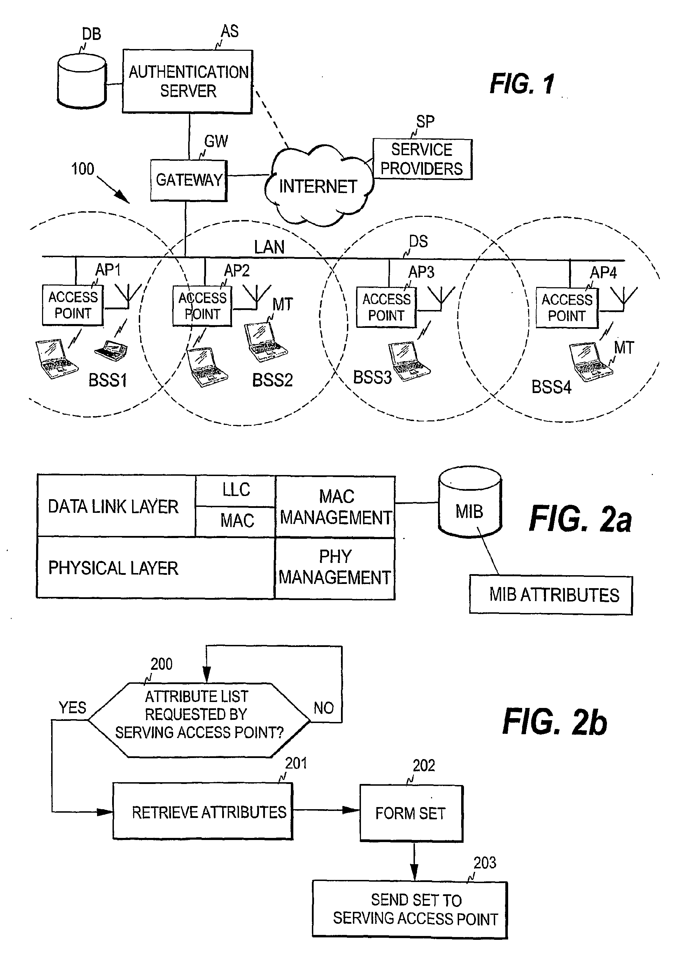

FIG. **1** illustrates a typical communication system according to the invention. The system includes one or more WLAN networks, each connected by means of a gateway **GW** (a router) to another network, such as the Internet, which contains service providers **SP.** As indicated above, each WLAN network comprises one or more access points, each communicating wirelessly with the terminals within the coverage area, i.e. the cell, of the access point and thus forming a bridge between the terminals and the wired network. In this context, the coverage area is also called the service area.

It is assumed here that the WLAN network **100** shown in the figure comprises four access points AP1 to AP4. In this type of network (i.e. in an infrastructure network) an access point and at least one terminal is said to form a Basic Serving Set (BSS). A series of BSSs then forms an Extended Service Set (ESS). These BSSs are connected to each other by a Distribution System (DS), which can be a wired network, such as an Ethernet LAN, within which TCP/IP packets are transmitted, or a wireless network., or a combination of these two. As the invention does not relate to the architecture of the Distribution System, it is not discussed in more detail here.

Users moving in the area of the WLAN network may use portable computers, PDA equipment, intelligent phones or other such mobile terminals **MT**. In the same way as an ordinary GSM telephone, the terminals can be made up of two parts: the actual subscriber device, e.g. a portable computer (with software), and a SIM (Subscriber Identity Module), whereby from the viewpoint of the network the subscriber device becomes a functioning terminal only when the SIM has been inserted into it. The SIM may be the subscriber identity module for use in the GSM network or in the UMTS, for example. In the latter case it is termed the USIM (Universal Services Identity Module). However, the terminals may equally well be traditional WLAN terminals in which no SIM is used.

The system further typically contains an authentication server **AS** of the WLAN network. The authentication server is connected to the above-mentioned gateway through a secured connection, which is typically a TCP/IP connection established through an operator network or through the Internet.

Since the present invention concerns the cooperation of the mobile terminals and the access points, the structure of the system is not discussed any further. As is known, the IEEE standard 802.11 defines the physical layer options and the MAC (Media Access Control) layer protocol for the wireless LAN. Since the system of the present invention is compatible with these definitions, they are not discussed in more detail here. An interested reader may find a lot of literature describing the overall structure and function of a WLAN network. Reference is also made to the above-mentioned WO- publication WO01/63842, which contains a brief description of a WLAN network according to the IEEE 802.11 standard.

In the present invention, the properties of the MAC layer are utilized in a new way. FIG. **2a** illustrates the protocol architecture of the IEEE 802.11 standard. As shown in the figure, the actual media access control (MAC) protocol operates in the lower sub-layer of the second layer of the OSI layer model, which is the Data Link Layer (DLL). The MAC management layer supports the association and roaming functionalities and it further controls the authentication and encryption mechanisms, synchronization of the terminals and power saving functions, for example. The MAC management layer further maintains a MAC layer management database, i.e. the MIB (Management Information Base) of the MAC layer. The MAC layer cooperates with the physical management layer to maintain the database. In the present invention, the content of this database is utilized to provide the terminals with an intelligent mechanism for selecting an access point during the joining or re-association process.

The MAC layer MIB includes various parameters or attributes that are utilized in the present invention. In other words, the present invention utilizes existing attributes of the MAC layer MIB, which the MAC layer protocol also utilizes. These attributes give an indication of the quality of the link between the access point and the mobile terminal. Examples of the MAC layer attributes that can be utilized in the present invention are:

- RSSI (Received Signal Strength Indicator), which indicates the level of the received signal.

- NF (Noise Floor), which indicates the interference level on the link.

- TxRetry and RxRetry, which indicate the amount of re-transmissions and re-receptions, respectively, performed on the link. TxRetry from the point of view of the terminal corresponds to the TxRetry from the point of view of the access point.

- DR (Data Rate), which indicates the degree of throughput on the link.

- ACK (Acknowledgment). An acknowledgement is sent when a packet is transmitted successfully.

- ARQ (Automatic repeat request). An automatic repeat request is sent when a packet is lost.

- Back-off window, which indicates the amount of time that the terminal waits for its turn to access the media.

Further attributes which can be utilized are:

- CCA (Clear Channel Assessment) which indicates when the media is busy or free.

- RATE, which indicates the basic rates at which the terminal transmits. If the lower basic rates are used frequently, it indicates that the quality of the link has dropped (due to a long link span or due to interferences).

In the present invention, a mobile terminal associated with an access point retrieves selected attributes from its MAC layer MIB and forms a set of the attributes. The set may be in the form of a list or table, for example. The terminal stores the set and further forwards it to the serving access point. The desired attributes can be retrieved by means of normal get commands used to retrieve information from the MIB.

In one embodiment of the invention, the MIB attributes are used as such, which requires minimum changes in the terminal. In this case, the mobile terminal only has to retrieve from the MIB the attributes to be utilized and form the set to be transmitted. However, it is also possible that the terminal processes at least some of the attributes. The terminal may, for example, examine selected attributes periodically and produce a new variable from each attribute, such as the average of an attribute.

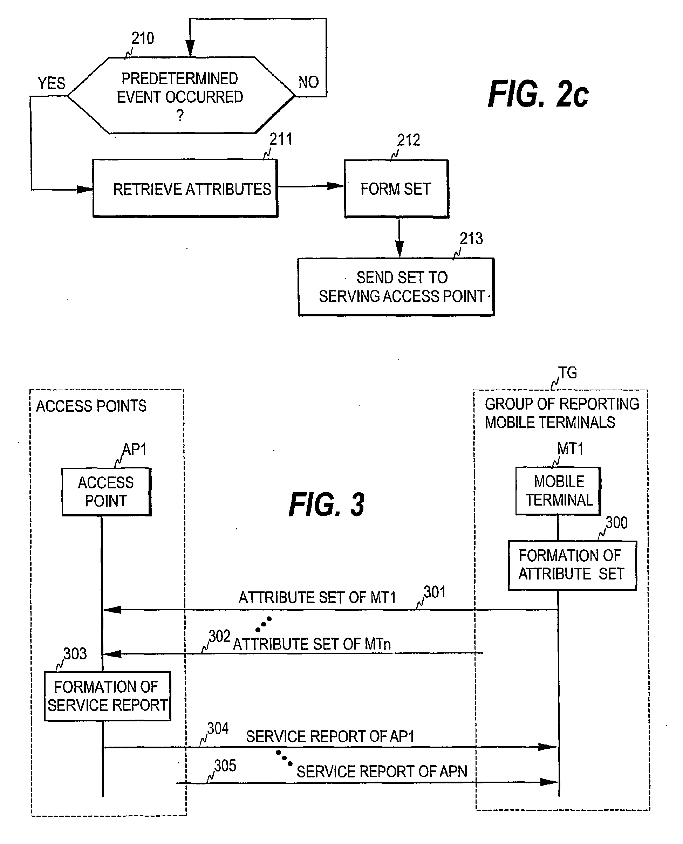

The mobile terminal may send the attribute set periodically or upon a request received from the access point, or both. FIG. **2b** illustrates the operation of a reporting terminal in the case where the serving access point polls the terminals for the sets. In this case, the terminal monitors for a request sent by the serving access point (step **200**) and generates (or updates) and sends the set only when a request to send the set is received from the serving access point (steps **201** to **203**). However, the terminal may also send the attribute set without a request from the access point. This kind of embodiment is illustrated in FIG. **2c****.** As shown in the figure, the attribute set may be sent in response to a specified event, such as a sudden change in one or more of the attributes, for example (cf. step **210**). The terminal may also collect and process the attributes in advance, prior to the sending of the set, i.e. steps **201** and/or **202** in FIG. **2b** and steps **211** and/or **212** in FIG. **2c** may be performed in advance in the background.

FIG. **3** illustrates the basic operations according to the invention by showing one terminal **MT1** and the access point **AP1** serving it. The mobile terminal generates the above-described set (step **300**), stores it, and sends a copy of the set to the serving access point (step **301**). A plurality of other terminals associated with access point **AP1** send similar sets. In other words, the mobile terminal shown in the figure belongs to a group **TG** of reporting terminals associated with access point **AP1.** Access point **AP1** therefore receives a similar set from a plurality of mobile terminals (cf. step **302**). As is obvious, a similar set here refers to a set with the same attributes, but indicating terminal-specific attribute values. The sets can be transmitted in management frames, for example.

Although all terminals can act as reporting terminals, in one embodiment of the invention the terminals of a certain type form the group TG of reporting terminals. In this way this task can be given to terminals that have good performance in terms of battery power, such as laptops. However, even if the sets were sent only by certain terminals only, all terminals can utilize the results, as discussed below.

On the basis of the attribute sets received, the access point **AP1** generates a cell or service report indicating the current service conditions in its cell (step **303**). This typically involves calculation of various statistical values of said attributes, such as the average of each attribute received in the sets. Instead of an average, the access point may also determine the attribute values below which a certain proportion, such as half, of the reporting terminals are at the moment. For example, regarding the RSSI, the access point may calculate the average of the RSSls of all reporting terminals or the RSSI value above which the current RSSI values of a certain proportion of the reporting terminals are. Different attributes may be subject to different type of calculations.

In one embodiment of the invention, the access point further monitors its own load level and determines an average load level over a predetermined period, such as over the last 5 minutes.

The access point then compiles a service report, which includes at least some of the calculated variables. This service report preferably includes the calculated average load level and possibly also the instantaneous load level of the access point.

The service report is then transmitted (step **304**) to at least one mobile terminal. The transmission can be a unicast transmission (such as a Probe Response), a broadcast transmission (in the beacon frame) or a multicast transmission. Moreover, as the neighboring access points also receive attribute sets from the terminals within their respective cell areas and as they send similar service reports (cf. step 305), an individual terminal, such as terminal **MT1** shown in the figure, can typically receive service reports from a plurality of access points.

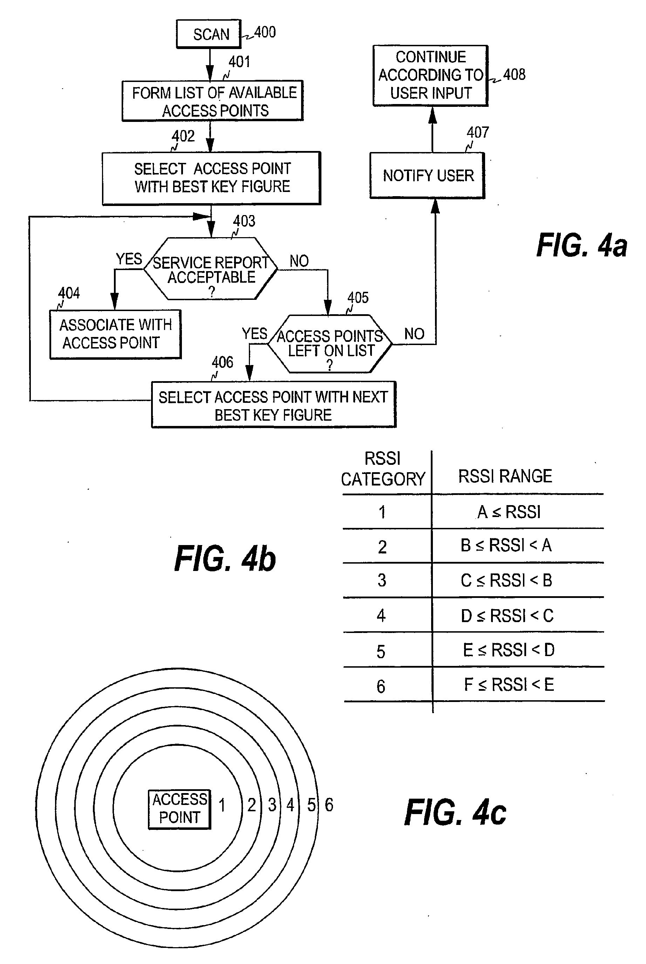

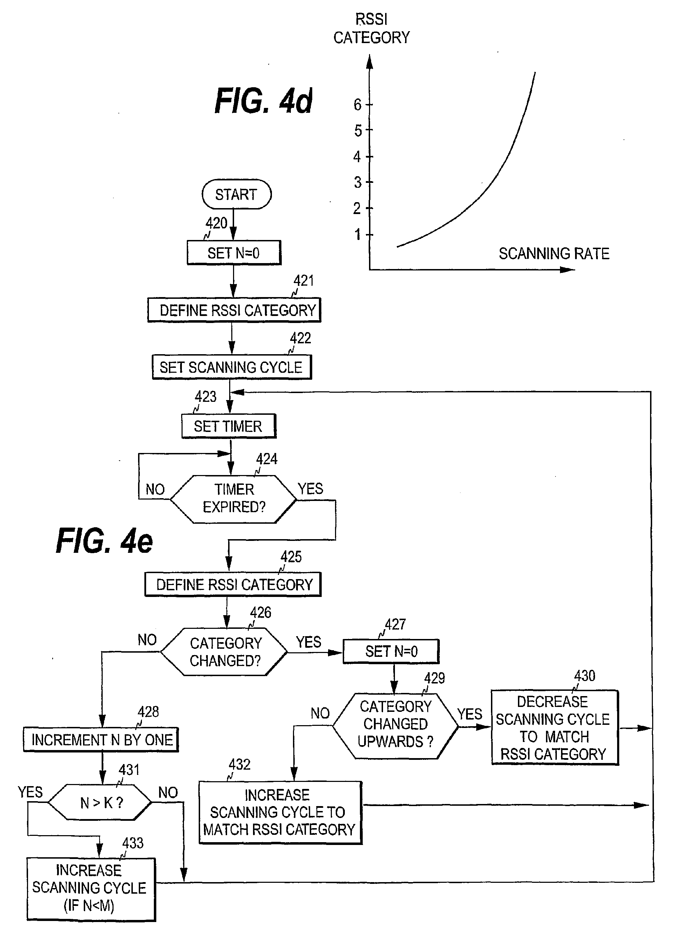

The above-described process is utilized when a mobile terminal joins the network. The terminal that enters the network or that is turned on in the network utilizes the service reports and selects the access point with the help of the service reports received. FIG. **4** is a flow chart illustrating the selection of an access point when a mobile terminal joins a network. When a mobile terminal enters a network or is turned on in the network, it starts to scan through the channels, using the above-described scanning methods, for example (step **400**). In this way, the terminal receives the service reports from each of the access points available at the current location of the terminal. The terminal forms a set of the available access points and their respective attributes (step **401**) and starts the process of selecting the best available access point.

It is assumed here that this selection process uses a key figure on which the selection is based. As discussed below, the key figure may simply be one of the attributes, which is chosen as the primary attribute. In this example, the RSSI related to each access point link is chosen as the key figure/primary attribute, since the RSSI indicates which one of the access points is the best one, assuming that other factors affecting the quality of the service are substantially equal with respect to each of the access points. The terminal first examines the access point with the best RSSI value (step **402**), i.e. the terminal starts the selection from the access point that hypothetically is the best one. However, the terminal then uses the information received in the service reports to verify whether this is the case. If the RSSI is not taken into account, the information received in the service reports indicates the general performance and interference levels in the neighborhood of the mobile terminal. This information is then used to verify whether the access point with the best RSSI can be selected. Each of the attributes is typically given a certain range indicating the values that are acceptable for the particular attribute. The terminal checks each attribute by comparing its value with the accepted values (step **403**). If all attributes contained in the cell report are acceptable, the terminal associates with the access point in question (step **404**). If the terminal notices that at least one of the attributes in the cell report is not acceptable, it starts to examine the service report of the access point with the next best RSSI (steps **406** and **403**). In this way the terminal continues the examining of the access points in the order indicated by the RSSI value until an acceptable access point is found. If all the service reports received contain one or more unacceptable attributes, the terminal may continue scanning or may notify the user of the situation (step **407**) and wait for user input. Depending on the selection by the user, the terminal may then continue scanning, stop searching for an access point without joining the network, or select the best access point available even though at least one of the attributes in the corresponding service report is not acceptable.

The above-described process can also be utilized in connection with roaming. In other words, when the terminal moves in the network, it can reassociate with an access point that is selected by means of the service reports in the above-described manner.

In one embodiment of the invention the reporting terminals within the service area of an access point are divided into different categories according to the RSSI value related to the respective access point link. FIGS. **4b** and **4c** illustrate this division, assuming that 6 different categories are used. As is shown in FIG. **4b****,** the first RSSI category covers RSSI values that are equal to or greater than A, the second RSSI category covers RSSI values that are smaller than A but equal to or greater than B (B<A), the third RSSI category covers RSSI values that are smaller than B but equal to or greater than C (C<B), etc. The RSSI value range is thus divided into consecutive sub-ranges. The sub-range to which the value of the RSSI experienced by the mobile terminal falls determines the category of the mobile terminal with regard to the respective access point.

In an ideal environment the terminals are thus located as shown in FIG. 4c with regard to the serving access point: the terminals belonging to category 1 are within circle 1, the terminals belonging to category 2 are within ring 2, the terminals belonging to category 3 are within ring 3, etc.

The RSSI value of the attribute set sent to the serving access point thus indicates the category of the corresponding mobile terminal. Based on the categories of the reporting terminals, the serving access point generates a service report that includes category-specific values for an individual variable to be inserted in the service report, each category-specific value being calculated based on the respective attribute values received from the terminals belonging to the same category. For example, when an average of an attribute is to be inserted in the service report, the access point calculates an average for each category i (i=1, 2, 3, ...), the average being calculated based on the attribute values received from terminals belonging to category i. When selecting an access point, a terminal then takes into account only the values of the categories to which it belongs. For example, if the terminal belongs to category 5 with respect to the serving access point, to category 6 with respect to a first neighboring access point, and to category 7 with respect to a second neighboring access point, the terminal determines a key figure based on the category 5 specific service report from the serving access point, a key figure based on the category 6 specific service report from the first neighboring access point, and a key figure based on the category 7 specific service report from the second neighboring access point. In this way, only the most appropriate information, i.e. the information originating from those reporting terminals, which are in a position comparable to that of the selecting terminal, is taken into account when selecting the access point. In other words, the terminals that are in clearly different positions within the cell than the selecting terminal, cannot distort the information on which the selection is based. For example, the mobile terminals that are very close to the access point do not distort the information that forms the basis for the selection made by a remotely located mobile terminal.

Although the division is in the above example based on the RSSI values, a similar attribute that indicates the quality of the link to the access point or the level of the received signal can be used.

In another embodiment of the invention, the scanning cycle (i.e. the interval between two consecutive selection processes) is dependent on the category of the terminal with respect to the serving access point so that the larger the category the shorter the scanning cycle. Thus, the farther away the terminal is from the serving access point, the greater the scanning rate. FIG. **4d** illustrates an embodiment in which the scanning rate increases exponentially when the category changes upwards. In this way, the power consumption of the mobile terminals that have a good quality link can further be reduced, and the mobile terminals that have a poorer link to the serving access point have more frequently a chance to select a better access point.

However, in order to save the batteries of the terminals that do not move, the scanning cycle can be made longer if the category of the terminal does not change for a certain period of time. FIG. **4e** is a flow diagram illustrating the operation of a terminal in an embodiment like this. First, a parameter N is given the value zero (step **420**) before the RSSI category is defined for the first time at step **421.** Based on the category defined, the scanning cycle is then determined and set (step **422**), and a timer is set (step **423**). When the timer expires, the category is defined again (step **425**). The terminal then examines at step **426**, whether the category has changed. If so, the parameter N is reset to zero and the scanning cycle is updated to match the scanning cycle of the new category. If the category number increased (i.e. the terminal apparently moved farther away from the access point), the scanning cycle is shortened (i.e. the scanning rate is increased) to match the scanning cycle of the new category (step **430).** If the category changed downwards (i.e. the terminal apparently moved closer to the access point), the scanning cycle is lengthened (i.e. the scanning rate is decreased) to match the new category (step **432**). When the scanning cycle has been updated, the process jumps to step **423** to set the timer and to determine the RSSI category again upon the expiration of the timer.

If it is detected at step **426** that the RSSI category has not changed, the parameter N is incremented by one (step **428**) after which the process examines whether the value of the parameter is greater than K, where K is a small integer, for example 1, 2, or 3. If this is the case, the scanning cycle is increased, since in this case the RSSI category has been checked at least K+1 consecutive times without the category being changed. If the value of N is not greater than K, the process jumps to step **423** to set the timer and to determine the RSSI category again upon the expiration of the timer.

There is typically an upper limit for the scanning cycle that can be set at step **433.** This may be implemented for example so that the scanning cycle is not increased any more when N reaches a certain upper threshold M. The amount by which the scanning cycle is increased at step **433** may depend on the value of N.

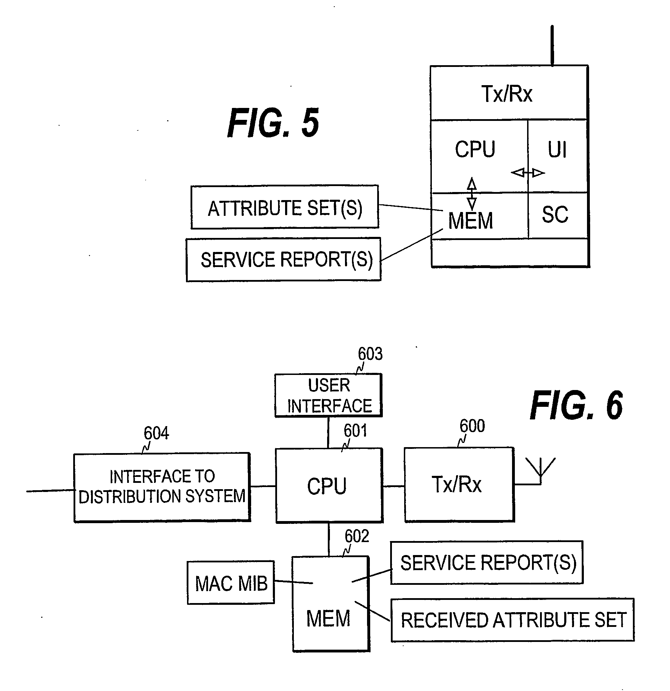

FIG. **5** illustrates the terminal elements in view of the invention. The mobile terminal **MT** comprises a transceiver **Tx/Rx** provided with at least one antenna, a control unit **CPU,** user interface means **UI** for creating a user interface, and memory means **MEM**, which may include one or more smart cards **SC**, such as a SIM card. However, as discussed above, a SIM card is not included in a traditional WLAN terminal.

The MIB attributes and the service reports are stored in the memory MEM of the terminal and the control unit performs the basic functions described above, i.e. the control unit retrieves the information from the memory, compiles the attribute set if the terminal is a reporting terminal, stores the service reports, and performs the selection of the access point. With the user interface means the control unit may inform the user of various events, if so desired. The control unit further controls the transceiver for scanning the channels and for establishing a connection to an access point.

FIG. **6** illustrates the elements of the access point. The access point comprises a transceiver unit **600**, a control unit **601**, memory means **602**, user interface means **603**, and a LAN interface for connecting the access point to the distribution system. As discussed above, this interface may be wireless, although it is at present typically a wired one. The MIB attributes, the attribute sets received, and the service reports are stored in the memory means **602**. The control unit performs the basic functions described above, i.e. the control unit processes the attribute sets received and generates the service reports. The control unit further monitors the load level of the access point and calculates the load attributes, such as the average load. The access point may be configured through the user interface means.

The service report may be generated in various ways, i.e. various statistical values based on the attribute sets can be determined. As the algorithm used in the terminal depends on the content of the service report, the algorithm may vary accordingly. Attribute values received from the terminals may also be used as such for the service reports. For example, the highest and/or lowest value of a certain attribute may be inserted in the service report.

The selection of the access point by using the service reports may also be based on another primary attribute than the RSSI, such as the average load of the access point. Furthermore, a combination of service report attributes may be used to determine the order in which the access points are examined. In this connection, a key figure can be calculated or determined on the basis of the service report attributes used for each access point. Each attribute can be given a different weight for the calculation of the key figure. The key figures calculated may also directly determine the access point, whereby the validity of each service report attribute is not checked separately or only the critical attributes are checked. If the critical attributes are acceptable, the access point with the best key figure is selected. As discussed above, one of the attributes, such as the RSSI, may also form the key figure.

As indicated above, certain types of terminals can provide the access points with the information necessary for the functionality according to the invention. The terminals can be given an identifier, such as a bit value, which indicates whether the terminal belongs to the group of reporting terminals. In this way, the access point knows that certain mobile terminals do not send the attribute sets. In other words, the terminal can reject a report request without causing an error situation. Such terminals can be intelligent phones, which have a lower battery capacity than laptop computers. For example, if the access point broadcasts a report request requesting the terminals to send their sets, the access point knows that a terminal returning a message with a certain bit value does not belong to the group.

If only some of the terminals act as the reporting terminals, all the terminals are not necessarily provided with the same functionalities. However, all the terminals according to the invention are provided with the functionalities for utilizing the service reports in the selection of the access point.

It was assumed in the above examples that all the available access points belong to the same sub-network (i.e. that the ESS identifier of the access points is the same). However, the mechanisms of the invention may equally well be used in an environment where the access points belong to different sub-networks. In this case the selection process may take the network into account, by favoring the access points in the currently serving network, for example.

An access point capable of operating according to at least two different WLAN standards or modes may indicate on one band that another band is also available. The attribute lists can be received and service reports sent on several or all frequency bands concerned and/or for the desired operating mode(s) of the access point. A terminal capable of using several bands/modes may scan one band while using another band. It is even possible that the access point indicates preferred modes/bands in the service report. This indication may simply be a bit string that the terminal is able to take into account. A terminal capable of using several bands/modes may thus select the access point based on the service reports of more than one band/mode. In the selection process, the access point can be given a certain additional weight depending on the value of the bit string. Alternatively, if the terminal notices that several access points in the neighborhood prefer the same band/mode, the terminal can make the selection based on the service reports relating to this band/mode only. If the category-based embodiment is utilized, it is also possible to send a service report for each category, instead of sending category-specific values in one service report.

Furthermore, various scanning mechanisms can be used for obtaining the service reports. The channels of the neighboring access points can be stored at each access point, which may then inform the said channels in the beacon frame or in the Probe Request. In this way the terminals can be notified of the channels to be scanned, whereby the scanning and selection processes can be accelerated, and the power consumption of the terminals reduced. Based on the reports received on different channels, the mobile terminal may further limit the number of channels to be scanned. The mobile terminal may, for example, notice that due to its movement only a few of the channels are actually such that the performance provided on the channels is comparable to the performance provided by the serving access point, and consequently limit the selection process to these channels.

The access points may also exchange their service reports through the Distribution System, whereby one access point can utilize the service reports of the neighboring access points and add various information about one or more other access points in its service report. In this way, the service reports can carry various priority orders, for example, in order to further accelerate the selection process.

Although the invention was described above with reference to the examples shown in the appended drawings, it is obvious that the invention is not limited to these. For example, the invention is not restricted to WLAN networks according to the IEEE 802.11 standard only, but can be used in connection with other wireless systems, such as systems based on the BRAN (Broadband Radio Access Networks) standard.

## Claims

1. A method for selecting an access point in a wireless communication system comprising mobile terminals (MT) and access points (AP1-AP4), each access point being capable of serving the mobile terminals within a service area of the access point, the method comprising the steps of:
- sending (203, 213; 301, 302) at least one set of attributes from a first group (TG) of mobile terminals to the access point currently serving said group of mobile terminals, each of said mobile terminals sending a set that contains at least one attribute indicating the quality of a wireless link between the serving access point and the mobile terminal;
- based on the sets, forming (303) a service report describing current service conditions in the service area of the access point;
- transmitting (304, 305) the service report to a second group of mobile terminals;
- in a mobile terminal belonging to said second group, examining at least one service report received; and
- in response to the examining step, selecting the access point to which a wireless link is to be established from said mobile terminal.

2. A method according to claim **1**, wherein the sets contain the same attributes.

3. A method according to claim **1**, wherein the first group (TG) contains mobile terminals (MT) of a predetermined type.

4. A method according to claim **1**, wherein the forming step includes the steps of (a) calculating the average load level of the access point over a preceding time period of a predetermined length and (b) inserting the average load level calculated into the service report.

5. A method according to claim **1**, wherein the transmitting step includes broadcasting the service report from the access point.

6. A method according to claim **1**, wherein the transmitting step includes sending the service report to a mobile terminal in response to a predetermined request received from said mobile terminal.

7. A method according to claim **1**, wherein
- the examining step includes the steps of (a) choosing (402) an access point based on at least one predetermined attribute and (b) checking (403) the service report of said access point, and
- the selecting step includes selecting (404) said access point if the checking step indicates that the service report is acceptable.

8. A method according to claim **1**, wherein said at least one attribute indicates the level of the signal received from the access point.

9. A method according to claim **2**, wherein the forming step includes the steps of (a) calculating averages for at least some of the attributes received in the sets and (b) inserting the averages calculated in the service report.

10. A method according to claim **1**, further comprising the step of retrieving the attributes from a management information base within the MAC layer of a mobile terminal (MT) belonging to said first group (TG).

11. A method according to claim **1**, wherein the forming step includes inserting into the service report information about at least one other access point.

12. A method according to claim **11**, wherein said information includes data concerning the wireless links used by said at least one other access point.

13. A method according to claim **3**, wherein the mobile terminals belonging to the first group (TG) are assigned an identifier by means of which said terminals can be identified from other terminals.

14. A method according to claim **1**, wherein the forming step includes dividing the first group (TG) of mobile terminals into different categories with regard to a certain attribute and forming a service report describing current service conditions with respect to at least one of the categories.

15. A method according to claim **14**, wherein the service report describes the current service conditions with respect to each of the categories.

16. A method according to claim **15**, further comprising the step of
- defining (421) the category of the mobile terminal with respect to each service report received, wherein said mobile terminal belongs to the second group and the examining step includes examining each service report with respect to the category defined.

17. A method according to claim **16**, wherein the examining step is performed at desired time intervals.

18. A method according to claim **17**, further comprising the step of controlling (430, 432) an interval between two consecutive examining steps, wherein the interval is changed in response to a change in the category.

19. A method according to claim **18**, wherein the controlling step further includes changing (433) the interval when the category remains the same for a certain period.

20. A method according to claim **15**, wherein said certain attribute indicates the level of the signal received from the serving access point.

21. A wireless communication system comprising mobile terminals (MT) and access points (AP1-AP4), each access point being capable of serving the mobile terminals within a service area of the access point, the system comprising:
- reception means (600-602) for receiving at least one set of attributes from a first group (TG) of mobile terminals, at least one of the attributes to indicate the quality of a wireless link between a particular mobile station and the access point serving said mobile station;
- processing means (601, 602) for forming, based on the sets, a service report describing current service conditions in the service area of the access point;
- transmission means (600) for transmitting the service report to a second group of mobile terminals; and
- in each of the mobile terminals (MT) in said second group, (a) examination means (CPU, MEM) for examining a service report received and (b) selection means (CPU), responsive to the examination means, for selecting the access point with which a wireless link is to be established.

22. A wireless communication system according to claim **21**, wherein the processing means (601, 602) are configured to form a service report describing current service conditions in different categories, each category corresponding to a certain value range of a predetermined attribute.

23. A wireless communication system according to claim **22**, wherein the examination means (CPU, MEM) are configured (1) to define the category of the mobile terminal and (2) to examine the service report with respect to the category defined.

24. An access point for a wireless communication system, the access point comprising:
- interface means (604) for connecting the access point to a distribution system;
- a transceiver (600) for communicating wirelessly with mobile terminals (MT) located within a service area of the access point, said transceiver being configured to receive sets of attributes from the mobile terminals, at least one of the attributes to indicate the quality of a wireless link between the serving access point and the respective mobile terminal;
- processing means (601, 602) for forming, based on the sets, a service report describing current service conditions in the service area of the access point;
wherein the transceiver (600) is further configured to transmit the service report to at least one mobile terminal.

25. An access point according to claim **24**, wherein the processing means (601, 602) are configured to form a service report describing current service conditions in different categories, each category corresponding to a certain value range of a predetermined attribute.

26. A mobile terminal for a wireless communication system, the mobile terminal (MT) comprising:
- a transceiver (Tx/Rx) for communicating with an access point (AP1-AP4) of the wireless communication system via a wireless link;
- memory means (MEM, SC) for storing attributes relating to said link;
- collection means (Tx/Rx, CPU, MEM) for collecting service reports from available access points, each service report describing current service conditions within a service area of a particular access point;
- examination means (CPU, MEM) for examining the service report received by the mobile terminal;
- selection means (CPU), responsive to the examination means, for selecting the access point; and
- access means (CPU, Tx/Rx) for establishing a wireless link with the access point selected.

27. A mobile terminal according to claim **26**, further comprising
- data collection means (CPU) for retrieving predetermined attributes from the memory means (MEM, SC), at least one of the attributes to indicate the quality of a wireless link between a serving access point and the mobile terminal;
wherein the transceiver (Tx/Rx) is adapted to send the retrieved attributes to an access point.

28. A mobile terminal according to claim **26,** wherein the mobile terminal (MT) is a mobile phone.

29. A mobile terminal according to claim **27,** wherein the mobile terminal (MT) is a laptop computer.

30. A mobile terminal according to claim **26,** wherein the examination means (CPU, MEM) are configured (1) to define a category for the mobile terminal and (2) to examine the service report with respect to the category defined, each category corresponding to a certain value range of a predetermined attribute, wherein the value of the predetermined attribute experienced by the mobile terminal determines the category of the mobile terminal.

## Patentansprüche

1. Verfahren zum Auswählen eines Zugangspunkts in einem drahtlosen Kommunikationssystem mit mobilen Endgeräten (MT) und Zugangspunkten (AP1-AP4), wobei jeder Zugangspunkt die mobilen Endgeräte innerhalb eines Dienstbereichs des Zugangspunkts bedienen kann, wobei das Verfahren die Schritte umfasst:
- Senden (203, 213; 301, 302) von zumindest einer Gruppe von Attributen von einer ersten Gruppe (TG) von mobilen Endgeräten zu dem Zugangspunkt, der die Gruppe von mobilen Endgeräten gerade bedient, wobei jedes der mobilen Endgeräte eine Gruppe sendet, die zumindest ein die Qualität einer drahtlosen Verbindung zwischen dem bedienenden Zugangspunkt und dem mobilen Endgerät angebendes Attribut enthält;
- basierend auf den Gruppen, Erstellen (303) eines Dienstberichts, der die aktuellen Dienstbedingungen in dem Dienstbereich des Zugangspunkts beschreibt;
- Übertragen (304, 305) des Dienstberichts zu einer zweiten Gruppe von mobilen Endgeräten;
- in einem zu der zweiten Gruppe gehörenden mobilen Endgerät, Prüfen von zumindest einem empfangenen Dienstbericht; und
- im Ansprechen auf den Prüfschritt, Auswählen desjenigen Zugangspunkts, zu dem eine drahtlose Verbindung von dem mobilen Endgerät herzustellen ist.

2. Verfahren nach Anspruch 1, wobei die Gruppen dieselben Attribute enthalten.

3. Verfahren nach Anspruch 1, wobei die erste Gruppe (TG) mobile Endgeräte (MT) eines vorbestimmten Typs enthält.

4. Verfahren nach Anspruch 1, wobei der Erstellungsschritt die Schritte des (a) Berechnens des Durchschnittsauslastungspegels des Zugangspunkts über eine vorbestimmte Zeitdauer einer vorbestimmten Länge und (b) des Einfügens des berechneten Durchschnittsauslastungspegels in den Dienstbericht enthält.

5. Verfahren nach Anspruch 1, wobei der Übertragungsschritt ein Rundsenden des Dienstberichts von dem Zugangspunkt enthält.

6. Verfahren nach Anspruch 1, wobei der Übertragungsschritt ein Senden des Dienstberichts zu einem mobilen Endgerät im Ansprechen auf eine vorbestimmte, von dem mobilen Endgerät empfangene Anfrage enthält.

7. Verfahren nach Anspruch 1, wobei
- der Prüfschritt die Schritte des (a) Auswählens (402) eines Zugangspunkts basierend auf zumindest einem vorbestimmten Attribut und des (b) Überprüfens (403) des Dienstberichts des Zugangspunkts enthält, und
- der Auswählschritt ein Auswählen (404) des Zugangspunkts enthält, falls der Überprüfungsschritt anzeigt, dass der Dienstbericht akzeptabel ist.

8. Verfahren nach Anspruch 1, wobei das zumindest eine Attribut den Pegel des von dem Zugangspunkt empfangenen Signals angibt.

9. Verfahren nach Anspruch 2, wobei der Erstellungsschritt die Schritte des (a) Berechnens von Durchschnittswerten für zumindest einige der in den Gruppen empfangenden Attribute und des (b) Einfügens der berechneten Durchschnittswerte in den Dienstbericht enthält.

10. Verfahren nach Anspruch 1, des Weiteren umfassend den Schritt des Empfangens der Attribute von einer Verwaltungsinformationsbank innerhalb der MAC-Schicht eines zu der ersten Gruppe (TD) gehörenden mobilen Endgeräts (MT).

11. Verfahren nach Anspruch 1, wobei der Erstellungsschritt ein Einfügen einer Information über zumindest einen anderen Zugangspunkt in den Dienstbericht enthält.

12. Verfahren nach Anspruch 11, wobei die Information Daten enthält, die die von zumindest einem anderen Zugangspunkt verwendeten drahtlosen Verbindungen betreffen.

13. Verfahren nach Anspruch 3, wobei den zu der ersten Gruppe (TG) gehörenden mobilen Endgeräten eine Identifikation zugewiesen wird, mittels der die Endgeräte von anderen Endgeräten identifiziert werden können.

14. Verfahren nach Anspruch 1, wobei der Bildungsschritt ein Aufteilen der ersten Gruppe (TG) von mobilen Endgeräten in verschiedene Kategorien bezüglich eines bestimmten Attributs und ein Bilden eines aktuelle Dienstbedingungen bezüglich zumindest einer der Kategorien beschreibenden Dienstberichts enthält.

15. Verfahren nach Anspruch 14, wobei der Dienstbericht die aktuellen Dienstbedingungen bezüglich einer jeden der Kategorien beschreibt.

16. Verfahren nach Anspruch 15, des Weiteren umfassend den Schritt des
- Definierens (421) der Kategorie des mobilen Endgeräts bezüglich eines jeden empfangenen Dienstberichts, wobei das mobile Endgerät zu der zweiten Gruppe gehört und der Prüfschritt ein Prüfen eines jeden Dienstberichts bezüglich der definierten Kategorie enthält.

17. Verfahren nach Anspruch 16, wobei der Prüfschritt in gewünschten Zeitintervallen durchgeführt wird.

18. Verfahren nach Anspruch 17, des Weiteren umfassend den Schritt des Steuerns (430, 432) eines Intervalls zwischen zwei aufeinander folgenden Prüfschritten, wobei das Intervall im Ansprechen auf eine Änderung in der Kategorie geändert wird.

19. Verfahren nach Anspruch 18, wobei der Steuerschritt des Weiteren ein Ändern (433) des Intervalls enthält, wenn die Kategorie für eine bestimmte Zeitdauer gleich bleibt.

20. Verfahren nach Anspruch 15, wobei das geänderte Attribut den Pegel des von dem bedienenden Zugangspunkts empfangenen Signals angibt.

21. Drahtloses Kommunikationssystem mit mobilen Endgeräten (MT) und Zugangspunkten (AP1-AP4), wobei jeder Zugangspunkt die mobilen Endgeräte innerhalb eines Dienstbereichs des Zugangspunkts bedienen kann, wobei das System umfasst:
- Empfangsmittel (600-602) zum Empfangen von zumindest einer Gruppe von Attributen von einer ersten Gruppe (TG) von mobilen Endgeräten, wobei zumindest eines der Attribute die Qualität einer drahtlosen Verbindung zwischen einer bestimmten Mobilstation und dem die Mobilstation bedienenden Zugangspunkt angibt;
- Verarbeitungsmittel (601, 602) zum Erstellen eines aktuelle Dienstbedingungen in dem Dienstbereich des Zugangspunkts beschreibenden Dienstberichts basierend auf den Gruppen;
- Übertragungsmittel (600) zum Übertragen des Dienstberichts an eine zweite Gruppe von mobilen Endgeräten; und
- in jedem der mobilen Endgeräte (MT) in der zweiten Gruppe, (a) Prüfmittel (CPU, MEM) zum Prüfen eines empfangenen Dienstberichts und (b) Auswahlmittel (CPU), ansprechend auf die Prüfmittel, zum Auswählen des Zugangspunkts, mit dem eine drahtlose Verbindung herzustellen ist.

22. Drahtloses Kommunikationssystem nach Anspruch 21, wobei die Verarbeitungsmittel (601, 602) ausgestaltet sind zum Erstellen eines aktuelle Dienstbedingungen in verschiedenen Kategorien beschreibenden Dienstberichts, wobei jede Kategorie einem bestimmten Wertebereich eines vorbestimmten Attributs entspricht.

23. Drahtloses Kommunikationssystem nach Anspruch 22, wobei die Prüfmittel (CPU, MEM) ausgestalten sind (1) zum Festlegen der Kategorie des mobilen Endgeräts und (2) zum Prüfen des Dienstberichts bezüglich der definierten Kategorie.

24. Zugangspunkt für ein drahtloses Kommunikationssystem, wobei der Zugangspunkt umfasst:
- Schnittstellenmittel (604) zum Verbinden des Zugangspunkts mit einem Verteilsystem;
- einen Sendeempfänger (600) zum drahtlosen kommunizieren mit mobilen Endgeräten (MT), die sich innerhalb eines Dienstbereichs des Zugangspunkts befinden, wobei der Sendeempfänger ausgestaltet ist zum Empfangen von Gruppen von Attributen von den mobilen Endgeräten, wobei zumindest eines der Attribute die Qualität einer drahtlosen Verbindung zwischen dem bedienenden Zugangspunkt und dem betreffenden mobilen Endgerät angibt;
- Verarbeitungsmittel (601, 602) zum Erstellen eines aktuelle Dienstbedingungen in dem Dienstbereich des Zugangspunkts beschreibenden Dienstberichts basierend auf den Gruppen;
wobei der Sendeempfänger (600) des Weiteren ausgestaltet ist zum Übertragen des Dienstberichts zu zumindest einem mobilen Endgerät.

25. Zugangspunkt nach Anspruch 24, wobei die Verarbeitungsmittel (601, 602) ausgestalten sind zum Erstellen eines aktuelle Dienstbedingungen in verschiedenen Kategorien beschreibenden Dienstberichts, wobei jede Kategorie einem bestimmten Wertebereich eines vorbestimmten Attributs entspricht.

26. Mobiles Endgerät für ein drahtloses Kommunikationssystem, wobei das mobile Endgerät (MT) umfasst:
- einen Sendeempfänger (Tx/Rx) zum Kommunizieren mit einem Zugangspunkt (AP1-AP4) des drahtlosen Kommunikationssystem über eine drahtlose Verbindung;
- Speichermittel (MEM, SC) zum Speichern von auf die Verbindung bezogenen Attributen;
- Sammelmittel (Tx/Rx, CPU, MEM) zum Sammeln von Dienstberichten von verfügbaren Zugangspunkten, wobei jeder Dienstbericht aktuelle Dienstbedingungen innerhalb eines Dienstbereichs eines bestimmten Zugangspunkt beschreibt;
- Prüfmittel (CPU, MEM) zum Prüfen des durch das mobile Endgerät empfangenen Dienstberichts;
- Auswahlmittel (CPU), ansprechend auf die Prüfmittel, zum Auswählen des Zugangspunkts; und
- Zugangsmittel (CPU, Ty/Rx) zum Herstellen einer drahtlosen Verbindung zu dem ausgewählten Zugangspunkt.

27. Mobiles Endgerät nach Anspruch 26, des Weiteren umfassend
- Datensammelmittel (CPU) zum Auffinden vorbestimmter Attribute aus dem Speichermittel (MEM, SC), wobei zumindest eines der Attribute die Qualität einer drahtlosen Verbindung zwischen einem bedienenden Zugangspunkt und dem mobilen Endgerät angibt;
wobei der Sendeempfänger (Tx/Rx) ausgestaltet ist zum Senden des aufgefundenen Attributs zu einem Zugangspunkt.

28. Mobiles Endgerät nach Anspruch 26, wobei das mobile Endgerät (MT) ein Mobiltelefon ist.

29. Mobiles Endgerät nach Anspruch 27, wobei das mobile Endgerät (MT) ein Laptop-Computer ist.

30. Mobiles Endgerät nach Anspruch 26, wobei die Prüfmittel (CPU, MEM) ausgestaltet sind (1) zum Definieren einer Kategorie für das mobile Endgerät und (2) zum Prüfen des Dienstberichts bezüglich der definierten Kategorie, wobei jede Kategorie einem bestimmten Wertebereich eines vorbestimmten Attributs entspricht, wobei der durch das mobile Endgerät erfahrene Wert des vorbestimmten Attributs die Kategorie des mobilen Endgeräts bestimmt.

## Revendications

1. Procédé pour sélectionner un point d'accès dans un système de communication sans fil comprenant des terminaux mobiles (MT) et des points d'accès (API à AP4), chaque point d'accès étant capable de servir les terminaux mobiles à l'intérieur d'une zone de service du point d'accès, le procédé comprenant les étapes consistant à :
- envoyer (203, 213; 301, 302) au moins un jeu d'attributs d'un premier groupe (TG) de terminaux mobiles au point d'accès servant actuellement ledit groupe de terminaux mobiles, chacun desdits terminaux mobiles envoyant un jeu qui contient au moins un attribut indiquant la qualité d'une liaison sans fil entre le point de service d'accès et le terminal mobile;
- sur la base des jeux, former (303) un rapport de service décrivant des conditions de service actuelles dans la zone de service du point d'accès ;
- transmettre (304, 305) le rapport de service à un second groupe de terminaux mobiles;
- dans un terminal mobile appartenant audit second groupe, examiner au moins un rapport de service reçu; et
- en réponse à l'étape consistant à examiner, sélectionner le point d'accès avec lequel une liaison sans fil doit être établie à partir dudit terminal mobile.

2. Procédé selon la revendication 1, dans lequel les jeux contiennent les mêmes attributs.

3. Procédé selon la revendication 1, dans lequel le premier groupe (TG) contient des terminaux mobiles (MT) d'un type prédéterminé.

4. Procédé selon la revendication 1, dans lequel l'étape consistant à former comprend les étapes consistant à (a) calculer le niveau de charge moyen du point d'accès pendant une période précédente d'une longueur prédéterminée et (b) insérer le niveau de charge moyen calculé dans le rapport de service.

5. Procédé selon la revendication 1, dans lequel l'étape consistant à transmettre comprend l'étape consistant à diffuser le rapport de service à partir du point d'accès.

6. Procédé selon la revendication 1, dans lequel l'étape consistant à transmettre comprend l'étape consistant à envoyer le rapport de service à un terminal mobile en réponse à une demande prédéterminée reçue à partir dudit terminal mobile.

7. Procédé selon la revendication 1, dans lequel
- l'étape consistant à examiner comprend les étapes consistant à (a) choisir (402) un point d'accès sur la base d'au moins un attribut prédéterminé et (b) contrôler (403) le rapport de service dudit point d'accès, et
- l'étape consistant à sélectionner comprend l'étape consistant à sélectionner (404) ledit point d'accès si l'étape consistant à contrôler indique que le rapport de service est acceptable.

8. Procédé selon la revendication 1, dans lequel ledit au moins un attribut indique le niveau du signal reçu à partir du point d'accès.

9. Procédé selon la revendication 2, dans lequel l'étape consistant à former comprend les étapes consistant à (a) calculer des moyennes pour au moins certains des attributs reçus dans les jeux et (b) insérer les moyennes calculées dans le rapport de service.

10. Procédé selon la revendication 1, comprenant en outre l'étape consistant à récupérer les attributs à partir d'une base d'informations de gestion à l'intérieur de la couche MAC d'un terminal mobile (MT) appartenant audit premier groupe (TG).

11. Procédé selon la revendication 1, dans lequel l'étape consistant à former comprend l'étape consistant à insérer dans le rapport de service des informations concernant au moins un autre point d'accès.

12. Procédé selon la revendication 11, dans lequel lesdites informations comprennent des données concernant les liaisons sans fil utilisées par ledit au moins un autre point d'accès.

13. Procédé selon la revendication 3, dans lequel un identifiant, au moyen duquel lesdits terminaux peuvent être identifiés par rapport à d'autres terminaux, est attribué aux terminaux mobiles appartenant au premier groupe (TG).

14. Procédé selon la revendication 1, dans lequel l'étape consistant à former comprend les étapes consistant à diviser le premier groupe (TG) de terminaux mobiles en catégories différentes en ce qui concerne un certain attribut et former un rapport de service décrivant des conditions de service actuelles par rapport à au moins une des catégories.

15. Procédé selon la revendication 14, dans lequel le rapport de service décrit les conditions de service actuelles par rapport à chacune des catégories.

16. Procédé selon la revendication 15, comprenant en outre l'étape consistant à :
- définir (421) la catégorie du terminal mobile par rapport à chaque rapport de service reçu, dans lequel ledit terminal mobile appartient au second groupe et l'étape consistant à examiner comprend l'étape consistant à examiner chaque rapport de service en fonction de la catégorie définie.

17. Procédé selon la revendication 16, dans lequel l'étape consistant à examiner est réalisée à des intervalles de temps souhaités.

18. Procédé selon la revendication 17, comprenant en outre l'étape consistant à commander (430, 432) un intervalle entre deux étapes consécutives consistant à examiner, dans lequel l'intervalle est changé en réponse à un changement de la catégorie.

19. Procédé selon la revendication 18, dans lequel l'étape consistant à commander comprend en outre l'étape consistant à changer (433) l'intervalle lorsque la catégorie reste la même pendant une certaine période.

20. Procédé selon la revendication 15, dans lequel ledit certain attribut indique le niveau du signal reçu à partir du point de service d'accès.

21. Système de communication sans fil comprenant des terminaux mobiles (MT) et des points d'accès (API à AP4), chaque point d'accès étant capable de servir les terminaux mobiles à l'intérieur d'une zone de service du point d'accès, le système comprenant :
- des moyens de réception (600 à 602) destinés à recevoir au moins un jeu d'attributs à partir d'un premier groupe (TG) de terminaux mobiles, au moins un des attributs indiquant la qualité d'une liaison sans fil entre une station mobile particulière et le point d'accès servant ladite station mobile;
- des moyens de traitement (601, 602) destinés à former, sur la base des jeux, un rapport de service décrivant des conditions de service actuelles dans la zone de service du point d'accès;
- des moyens de transmission (600) destinés à transmettre le rapport de service à un second groupe de terminaux mobiles; et
- dans chacun des terminaux mobiles (MT) dans ledit second groupe, (a) des moyens d'examen (CPU, MEM) destinés à examiner un rapport de service reçu et (b) des moyens de sélection (CPU), répondant aux moyens d'examen, pour sélectionner le point d'accès avec lequel une liaison sans fil doit être établie.

22. Système de communication sans fil selon la revendication 21, dans lequel les moyens de traitement (601, 602) sont configurés pour former un rapport de service décrivant des conditions de service actuelles dans des catégories différentes, chaque catégorie correspondant à une certaine plage de valeurs d'un attribut prédéterminé.

23. Système de communication sans fil selon la revendication 22, dans lequel les moyens d'examen (CPU, MEM) sont configurés (1) pour définir la catégorie du terminal mobile et (2) pour examiner le rapport de service par rapport à la catégorie définie.

24. Point d'accès pour un système de communication sans fil, le point d'accès comprenant :
- des moyens d'interface (604) destinés à connecter le point d'accès à un système de distribution;
- un émetteur-récepteur (600) destiné à communiquer sans fil avec des terminaux mobiles (MT) situés à l'intérieur d'une zone de service du point d'accès, ledit émetteur-récepteur étant configuré pour recevoir des jeux d'attributs à partir des terminaux mobiles, au moins un des attributs indiquant la qualité d'une liaison sans fil entre le point de service d'accès et le terminal mobile respectif ;
- des moyens de traitement (601, 602) destinés à former, sur la base des jeux, un rapport de service décrivant des conditions de service actuelles dans la zone de service du point d'accès;
dans lequel l'émetteur-récepteur (600) est en outre configuré pour transmettre le rapport de service à au moins un terminal mobile.

25. Point d'accès selon la revendication 24, dans lequel les moyens de traitement (601, 602) sont configurés pour former un rapport de service décrivant des conditions de service actuelles dans des catégories différentes, chaque catégorie correspondant à une certaine plage de valeurs d'un attribut prédéterminé.

26. Terminal mobile pour un système de communication sans fil, le terminal mobile (MT) comprenant :
- un émetteur-récepteur (Tx/Rx) destiné à communiquer avec un point d'accès (AP1 à AP4) du système de communication sans fil par l'intermédiaire d'une liaison sans fil ;
- des moyens de mémoire (MEM, SC) destinés à stocker des attributs concernant ladite liaison;
- des moyens de collection (Tx/Rx, CPU, MEM) destinés à collecter des rapports de service à partir de points d'accès disponibles, chaque rapport de service décrivant des conditions de service actuelles à l'intérieur d'une zone de service d'un point d'accès particulier ;
- des moyens d'examen (CPU, MEM) destinés à examiner le rapport de service reçu par le terminal mobile ;
- des moyens de sélection (CPU), répondant aux moyens d'examen, destinés à sélectionner le point d'accès ; et
- des moyens d'accès (CPU, Tx/Rx) destinés à établir une liaison sans fil avec le point d'accès sélectionné.

27. Terminal mobile selon la revendication 26, comprenant en outre :
- des moyens de collection de données (CPU) pour récupérer des attributs prédéterminés à partir des moyens de mémoire (MEM, SC), au moins un des attributs indiquant la qualité d'une liaison sans fil entre un point d'accès de service et le terminal mobile ;
dans lequel l'émetteur-récepteur (Tx/Rx) est adapté pour envoyer les attributs reçus à un point d'accès.

28. Terminal mobile selon la revendication 26, dans lequel le terminal mobile (MT) est un téléphone mobile.

29. Terminal mobile selon la revendication 27, dans lequel le terminal mobile (MT) est un ordinateur portable.

30. Terminal mobile selon la revendication 26, dans lequel les moyens d'examen (CPU, MEM) sont configurés (1) pour définir une catégorie pour le terminal mobile et (2) pour examiner le rapport de service par rapport à la catégorie définie, chaque catégorie correspondant à une certaine plage de valeurs d'un attribut prédéterminé, dans lequel la valeur de l'attribut prédéterminé rencontré par le terminal mobile détermine la catégorie du terminal mobile.
